# EUROPEAN PATENT SPECIFICATION

(11) **EP 2 666 925 B1**
(45) Date of publication and mention of the grant of the patent: **08.04.2015**
(21) Application number: 13168645.3
(22) Date of filing: 22.05.2013
(51) Int. Cl.: E04D 3/35, F24J 2/52, F24J 2/46

(54) **Composite structure of an insulated panel and covering metal sheet with corresponding attaching means, for the application in building structures**
Verbundstruktur eines isolierten Paneels und Belagblech mit entsprechenden Befestigungsmitteln zur Anwendung in Baukonstruktionen
Structure composite et panneau isolé d'une feuille métallique de recouvrement avec moyen de fixation correspondant, pour l'application dans des structures de bâtiment

(30) Priority: 23.05.2012 IT MI20120891
(43) Date of publication of application: 27.11.2013
(73) Proprietor: Iscom S.p.A., 37026 Pescantina, VR (IT); Isopan S.p.A., 37135 Verona (IT)
(72) Inventor: Menegoli, Mauro, 37026 Pescantina VR (IT); Guerrini, Daniele, 37135 Verona (IT)
(74) Representative: Faggioni, Marco

(56) References cited:
- AU-A4- 2009 101 276
- DE-A1- 4 216 539
- GB-A- 2 200 670
- US-A- 4 028 859

## Description

### FIELD OF THE INVENTION

The present invention relates to an improved structure of an insulated panel and corresponding covering structure, in particular for use in the building industry.

### BACKGROUND

Insulating panels for use in the building industry, in particular for the covering of roofs, are well-known in the art. These conventional panels typically consist of two outer sheets, made of metal or PVC, between which a pane of foamed polyurethane is inserted. Depending on the overall size, on the material used and on the thickness of the outer sheets, the insulating panels may also be self-supporting.

An example of insulating panel consists of the "panels for covering" from Isopan SpA's catalogue. Another example is described in WO2004/009929, which illustrates a panel consisting of a pair of metal sheets, one of which decorated with corrugated ornamental motives, coupled sandwich-like with an intermediate insulating layer. More precisely, the lower metal sheet is essentially flat, while the upper metal sheet is shaped so as to form longitudinal ribbings; these have primarily a stiffening function, but at the same time they admit the use of fastening means, in particular screws, for anchoring to the below-lying panel-supporting structure. In this type of panel - where both metal sheets, the upper one and the lower one, are perforated to let said anchoring screws through - the concern exists of how to prevent the rain falling on the panel from seeping into it through the through-holes of the anchoring means. For this reason, said holes are practised in the upper metal sheet along the top line of the ribbing; thus, the water tends to flow on the sides of the ribbing and hence does not penetrate into said holes. In addition thereto, on this ribbing a shaped profile is applied, which covers the head of the screws and the relative holes in the metal sheet.

Another known insulated panel is the one illustrated in WO96/35028. This too is a panel consisting of a pair of metal sheets between which an insulating layer is arranged sandwich-like; the fastening means are again anchoring means of the panels to a supporting structure. Panel fastening occurs again by means of through-screws, however, the through-holes are provided only along a first edge of the panel: on the edge on the opposite side a different folding of the metal sheet is instead provided which forms a coupling and protection lip. The terminal lip has the function of engaging with the first edge of the adjacent panel with two different purposes: on the one hand, overlapping the first edge, it protects the holes of the anchoring screws, so as to inhibit water entry and, on the other hand, it engages with an undercut profile determining a stable coupling between two adjacent panels.

From document US-4,028,859 an insulated panel of the type mentioned above is also known, mainly meant for the mounting in a vertical wall. This panel has a series of longitudinal ribbings with a substantially swallow-tail-shaped section: support clamps cooperate with these. A structure of this type - provided for the mounting of the panels in a vertical position, where moreover the phenomenon of water seepage is little relevant - has some drawbacks. Firstly, the swallow-tail shape of the ribbings is highly stressful for the material, which must hence remain of a small thickness; in order to then have the desired stiffness, the system provides the insertion of complex and expensive stiffening frames into the panel. Secondly, the clamps, having a shape complementary to the swallow tail, are obtained integrally and must be slipped on and made to slide along the ribbing until bringing them in the desired position: it is hence necessary to have free access to the terminal end of the panel, which is not always possible, especially after having mounted the panel on the building.

Document US-4,028,859 discloses a combined structure of insulated panel according to the preamble of claim 1.

DE-102007036206 and DE-102007036208 relate again to an insulated panel of the type mentioned above, that is, consisting of a pair of corrugated metal sheets arranged sandwich-like with an insulating layer. In this case, the corrugated metal sheet has longitudinal ribbings shaped with a first root portion at the end of which a head is defined with a pair of opposite undercut planes. This configuration is relatively easier to obtain with respect to the one indicated above and allows the use of open clamps (which hence do not require the insertion from the terminal end of the panel). However, it is suggested to use clamps providing at least a moving part: this component allows the opening of the clamp and is then pushed against the undercut plane by tightening means. In order to oppose the tightening means, however, it is necessary to provide a further stiffening profile inside the concave profile of the ribbing. Moreover, mounting the clamps requires the intervention of a skilled operator, who can dose the tightening force, in order not to impair the integrity of the panel but, at the same time, without risking causing the involuntary detachment of the support clamp.

Moreover it must be noted that all the prior-art panels provide that the fastening of equipment and coverings occurs on the ribbing of the corrugated metal sheet. Typically, hence, the corrugated metal sheet faces outwards with respect to the building, while the flat metal sheet of the panel lies inside, substantially unused. This constraint is sometimes a serious limitation, because the presence of the ribbings of the corrugated metal sheet, on the outward facing side, is an obstacle in various applications both with respect to the installation of the covering metal sheet, and with respect to the exploitation of the gap volume.

### PROBLEM AND SOLUTION

The problem at the basis of the invention is to propose a combined structure of an insulated panel, of the general type described above consisting of a pair of metal sheets arranged sandwich-like with an insulating layer, and of relative attaching means of a covering metal sheet, which overcomes the mentioned drawbacks of the prior art.

In particular it is meant to provide a composite structure, consisting of an insulated supporting panel and relative finishing and covering metal sheet, which may be assembled through extremely secure, modular fastening systems, easy to install and which may be applied also on the flat side of the panel.

This object is achieved through an arrangement consisting of combined structure of insulated panel, covering metal sheet and relative attaching means, having the features mentioned in claim 1. The dependent claims describe preferred features of the structure.

### BRIEF DESCRIPTION OF THE DRAWINGS

Further features and advantages of the structure will appear more evident from the following detailed description of some preferred embodiments, given purely as a non-limiting example and illustrated in the accompanying drawings, wherein:
fig. 1 is an interrupted cross-section of an insulated panel with a substantially flat side and a corrugated side with a shaped ribbing;
fig. 2 is an interrupted, schematic detail view of a semi-portion of the ribbing of fig. 1;
fig. 3 is a cross-section view of a portion of a combined structure according to the invention;
fig. 4 is a section view, in greater scale, of the detail D of fig. 3;
fig. 5 is a perspective view, with parts removed, of the structure of fig. 3 configured to support metal sheets of the RIVERCLACK^{®} type;
fig. 6 is a perspective view, similar to that of fig. 5, which shows an alternative embodiment;
figs. 7 and 8 are views similar to those of figs. 5 and 6, respectively, in which the fastening means are provided with spacer columns; of which
figs. 9 and 10 represent detail views, respectively.

### DETAILED DESCRIPTION OF THE PREFERRED EMBODIMENTS

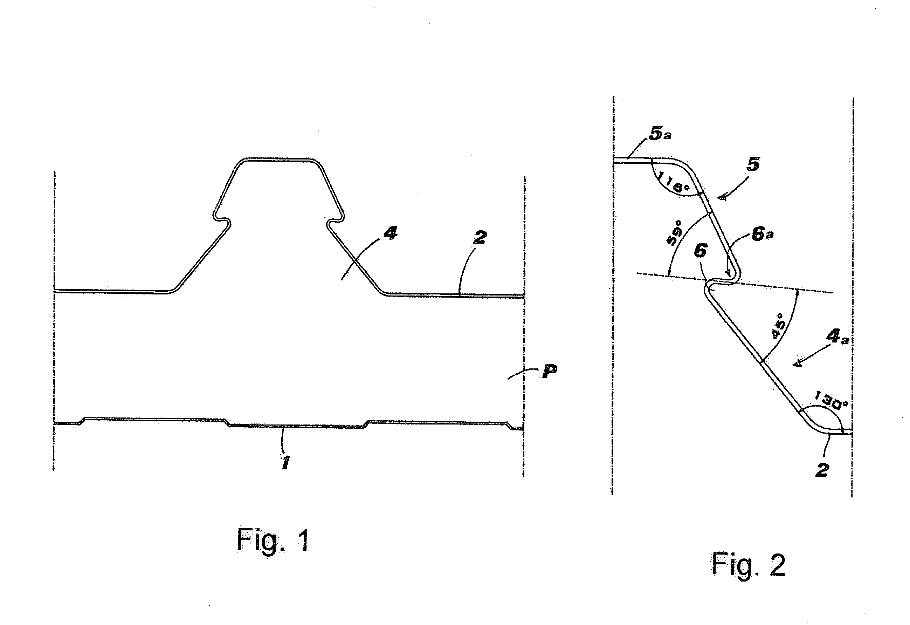

As shown in figures 1 and 2, an insulated panel P is manufactured, according to a technique well-known per se, as a prefabricated, composite structure, consisting of two metal sheets 1, 2 (for example, conventional thicknesses between 0.4 mm and 1.0 mm), between which a pane 3 of foamed, insulating material is arranged, for example of polyurethane of a thickness ranging between 40 mm and 120 mm.

It is furthermore already known, as equally shown in figures 1 and 2, to manufacture one of the two metal sheets, for example metal sheet 1, with a virtually flat profile, while the other metal sheet, i.e. metal sheet 2, as a corrugated metal sheet; in particular, corrugated metal sheet 2 has ribbings 4 at regular intervals, which ribbings are generally both stiffening elements and anchoring and/or support elements. Such ribbings have a section profile provided with a root portion, rising from the flat part of the metal sheet, which defines a retaining head at the distal end of said root portion.

According to the invention, the profile of the corrugated metal sheet is more specifically as clearly illustrated in fig. 2 and it is apt to engage with attaching means meant to be snap-coupled, as will be better illustrated below.

In particular, the profile of the ribbing 4 of the metal sheet has a root portion 4a, with walls converging outwards (of the panel) in the shape of equilateral trapetium, which ends in a distal, mushroom-shaped head portion 5. In the connection area between root portion 4a and mushroom-head 5, on each side of the ribbing, the metal sheet is folded a first time diverging outwards and slightly backwards, forming a small undercut fold, and then a second time converging inwards with an inclination of the same order of magnitude, but slightly smaller, as the sides of root portion 4a. The converging sides of terminal head 5 do not intercept each other, because they end in a connection side 5a substantially parallel to the panel plane. In other words, the section shape of the ribbing is a geometric shape given by two equilateral trapetiums one above the other, the bottom one having a major base and with the slanting sides more converging than the top one. Between the two trapezoidal figures an S-shaped fold is provided which forms two deep loops, an outer undercut groove 6 (internally forming a projecting rib) and an inner undercat recess 6a.

In particular, inclinations and sizing which have proved particularly effective, also to suitably cooperate with the elastic attaching means (which will be illustrated further on), are illustrated in fig. 2.

At least corrugated metal sheet 2 preferably has a thickness, for example, of 0.6 mm, hence such as to be sufficiently rigid, but at the same time to allow (during manufacturing) a folding of the metal sheet apt to form the ribbings 4 of the described shape.

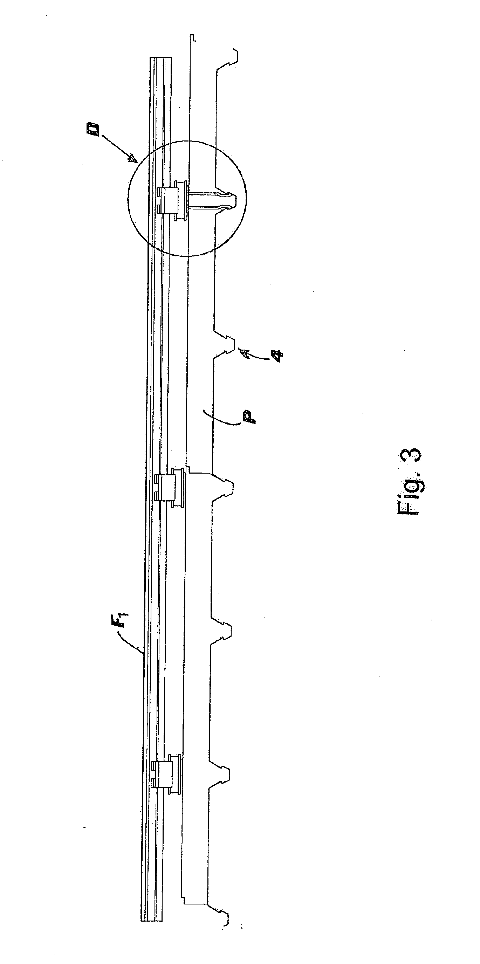

Fig. 3 shows a combined structure according to an embodiment of the invention. In a novel way, attaching means are provided - to which a finish/covering metal sheet may then be fastened, such as the known metal sheet manufactured and marketed under the trademark RIVERCLACK^{®} - which may be constrained to the panel from the inner side of corrugated metal sheet 2, hence giving the opportunity to connect the equipment in the shape of metal sheet on the side opposite to that of ribbings 4. For such purpose, the attaching means is configured to penetrate into the thickness of panel P, carving flat metal sheet 1, ending up engaging by means of respective hooked ends with the grooves 6a from the inner side.

In particular, according to the invention, the attaching means are substantially in the shape of a fork with two parallel hooked arms, which depart from a rigid box-like base and may be elastically moved closer together.

The parallel arms end with hook means, suited to snap engage with the inner undercut recesses 6a defined on the inner side of ribbing 4. The length of the arms is sufficient to run through the entire thickness of insulated panel P, snap-engaging with recesses 6a and bringing the rigid box-like base in the proximity of or adjacent to the outer side of flat metal sheet 1.

As illustrated in fig. 3, panel P is mounted horizontally with the corrugated metal sheet facing downwards, with the attaching systems on the flat side of panel P, i.e. on the top side.

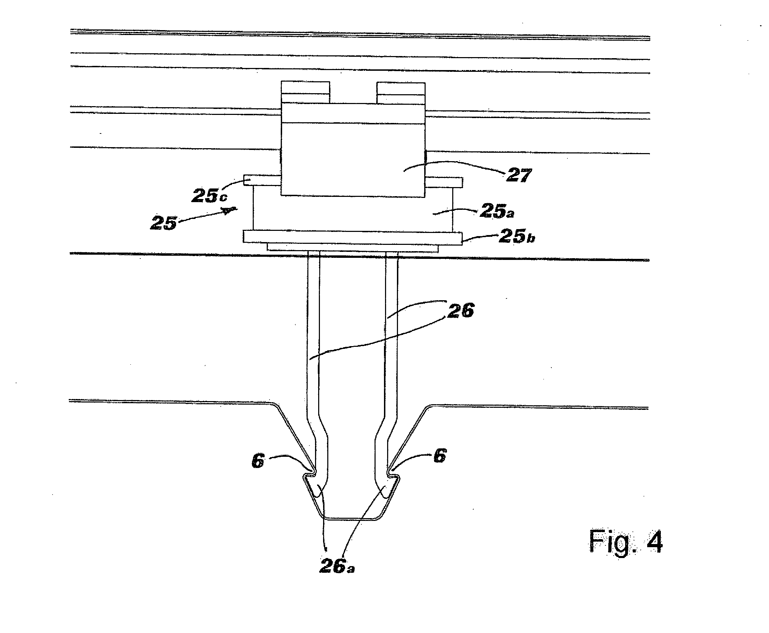

In the detail D of this drawing, shown enlarged in fig. 4, it can be seen that the groove 6 of ribbing 4 is used, on the inner side which defines recess 6a, for anchoring thereto hook means 26a of a pair of flexible arms 26 which depart from the box-like body 25 of the attaching means.

According to a preferred embodiment, the rigid box-like body 25 of the attaching means is configured in an original manner to be able to fasten thereto various technical accessories, possibly with the help of crossbars.

Typically, box-like body 25 consists of a main portion 25a, for example parallelepiped-shaped, comprised between two flat flange plates 25b and 25c which have a wider perimeter profile than the main portion. Thereby, the two flat flange plates 25b and 25c determine pairs of lateral rails (along the perimeter sides) with which some other fastening accessory may be slidably coupled.
For this purpose, the main body and flanges are preferably of a square or rectangular shape (i.e. with opposite parallel sides)

Elements 25, 26 and 27 are preferably made of plastic material, for example glass-fiber-reinforced polyamide.

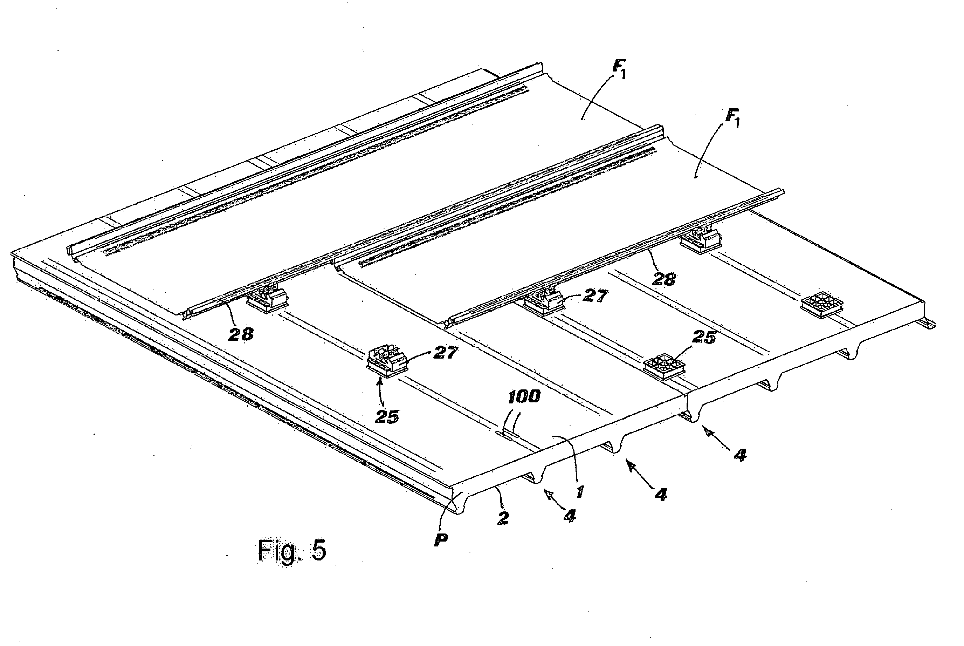

As shown in fig. 5, a typical accessory consists of a slider body 27 which acts as a clamp for the snap-fastening of the fastening edges 28 of a covering metal sheet F₁, for example the known metal sheets marketed by Iscom SpA under the trademark RI-VERCLACK^{®}, possibly in the version equipped with photovoltaic cells.

Further details on the specific configuration of clamp 27 are not supplied here, being well-known to a person skilled in the field as well as being described, for example, in WO2006117605 and WO2011007201.

During the assembling of the composite structure, attaching means 25, 26 and 27 are arranged in rows, in the desired number, in correspondence (but on the opposite side) of ribbings 4, applied on the side of flat metal sheet 1 (i.e. on the side opposite to the corrugated metal sheet which determines ribbings 4). The distance between the individual rows of attaching means is univocally determined by the pitch between ribbings 4.

In order to engage attaching means 25-27 with ribbings 4, a pair of notches 100 or a continuous hole of the same size is practised in top flat metal sheet 1, so as to insert flexible arms 26. The sizing of arms 26 and of corresponding hooks 26a is such as to be able to perforate the insulating material (typically foamed polyurethane) of the panel without problems.

In order to particularly facilitate this type of application, panel P is preferably built so that the insulating material does not obstruct the inner channel defined by the perimeter side of ribbing 4, or at least the head end portion 5 of ribbing 4. That helps a perfect coupling of hooks 26a within recesses 6a, eliminating any risk that the attaching means may come off the panel. For the disengagement of hooks 26a from recesses 6a - in case the attaching means are to be removed or moved - a tool to be inserted along flexible arms 26 and to wedge itself between the hook and the respective recesses can be used for example.

In order to obtain such panel configuration it is sufficient that during the lamination and foaming step of the insulating material, on corrugated metal sheet 2, on the inner side of the metal sheet, a thin sheet of easily breakable material (for example paper) is arranged, which prevents the filling of the channel of ribbing 4 with insulating foam, but which at the same time may be easily penetrated by flexible arms 26 during the installation.

Fig. 5 shows an embodiment of the structure, wherein covering metal sheet F₁ is arranged with its longitudinal axis in a crosswise direction to ribbing lines 4; clamps 27 are directly mounted on the bodies 25 of the attaching means: the pitch of ribbings 4 is irrelevant for the setting of metal sheets F₁.

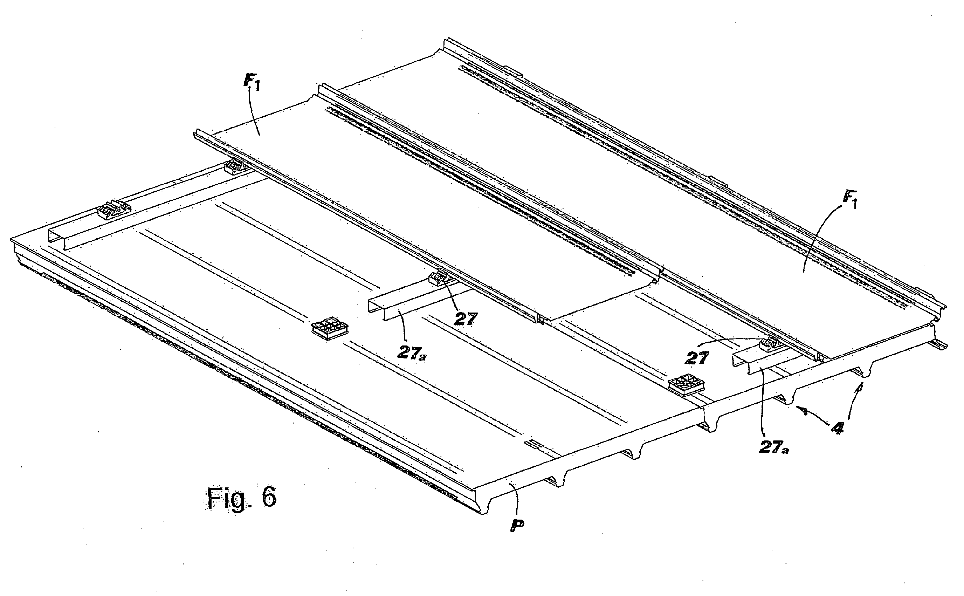

Vice versa, fig. 6 shows a variant in which the covering metal sheets are arranged aligned with ribbing lines 4. In this case, if the width of the metal sheets does not match the pitch of the ribbings 4 of the corrugated metal sheet of panel P, attaching clamps 27 are fastened to crossbars 27a. Crossbars 27a have a C-shaped profile suited to slidably engage with fastening bodies 25, in a crosswise direction to the axes of ribbings 4: thereby, the pitch of the ribbings does not affect the installation, because clamps 27 are fastened to the crossbars with the desired pitch compatible with those of metal sheets F₁.

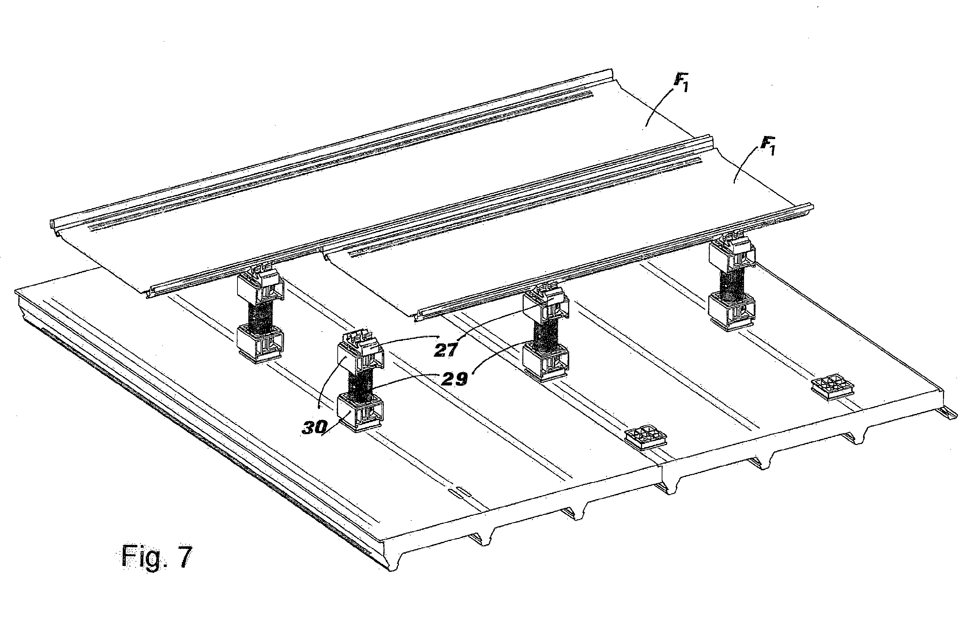

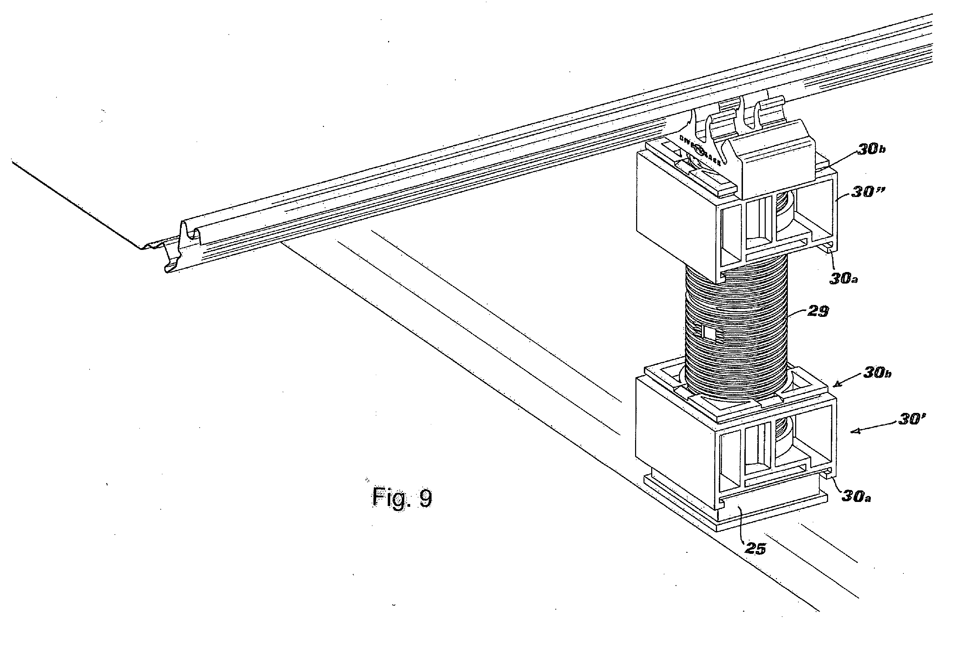

Fig. 7 shows a further embodiment, similar to that of fig. 5. In this case, clamps 27 are fastened to the upper end of a spacing column 29, in turn connected to a pair of coupling heads 30. As better shown in fig. 9, a spacing column preferably consists of a rigid cylindrical element provided with an outer threading, coupled at the two ends with respective identical head elements 30' and 30". Each head element 30 is in the shape of a rigid box-like body, which has a central hole meant for the screwing on cylindrical element 29 and is provided below and on top with respective female and male engaging elements for the coupling with other elements 29, so as to allow a certain modularity in height. In the illustrated embodiment, box-like bodies 30 have female engaging elements 30a and male engaging elements 30b similar to those provided on fastening body 25 of the embodiment of fig. 5, i.e. with slider engagement, to have an advantageous compatibility and modularity.

Lower head 30' is then mounted on fastening body 25, while upper head 30" engages with a clamp 27 meant in turn to couple with covering metal sheets F₁. The presence of column 29 allows to remarkably space apart metal sheets F₁ from insulated panel P and hence to define a gap chamber or compartment in which to install other typical elements for coverings, such as vapour, heat or acoustic insulators, or to determine good ventilation or the passage of other technical plants. Due to the fact that the attaching surface of the panel is substantially flat, the gap compartment is large and free from obstacles. Moreover through the modularity and fine adjustment (by means of screwing/unscrewing along threaded column 29) determined by the coupling of elements 29, 30' and 30", it is possible to create the desired slopes between the panels and the covering metal sheet.

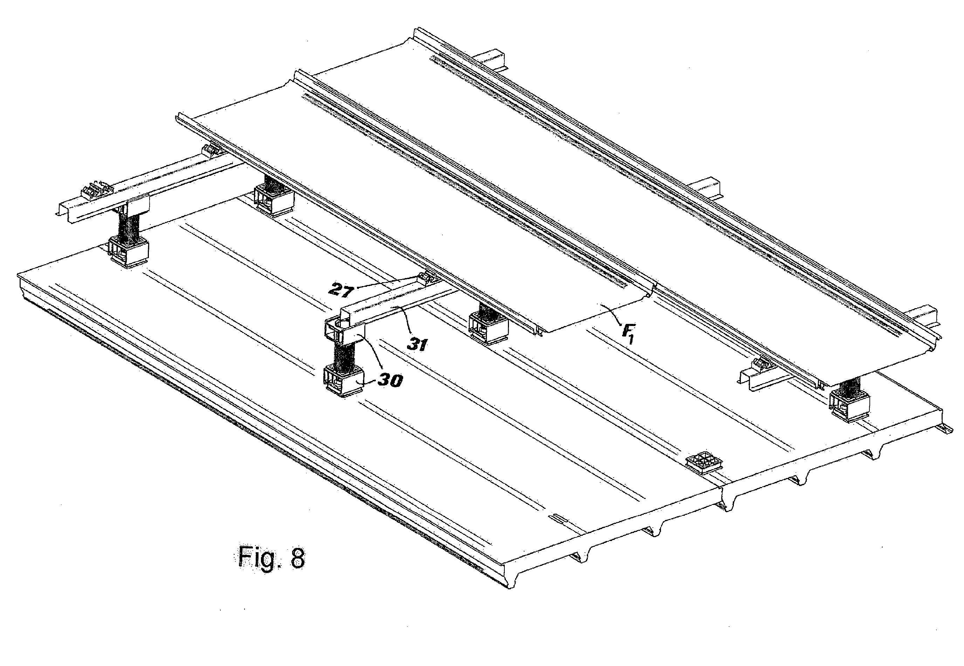

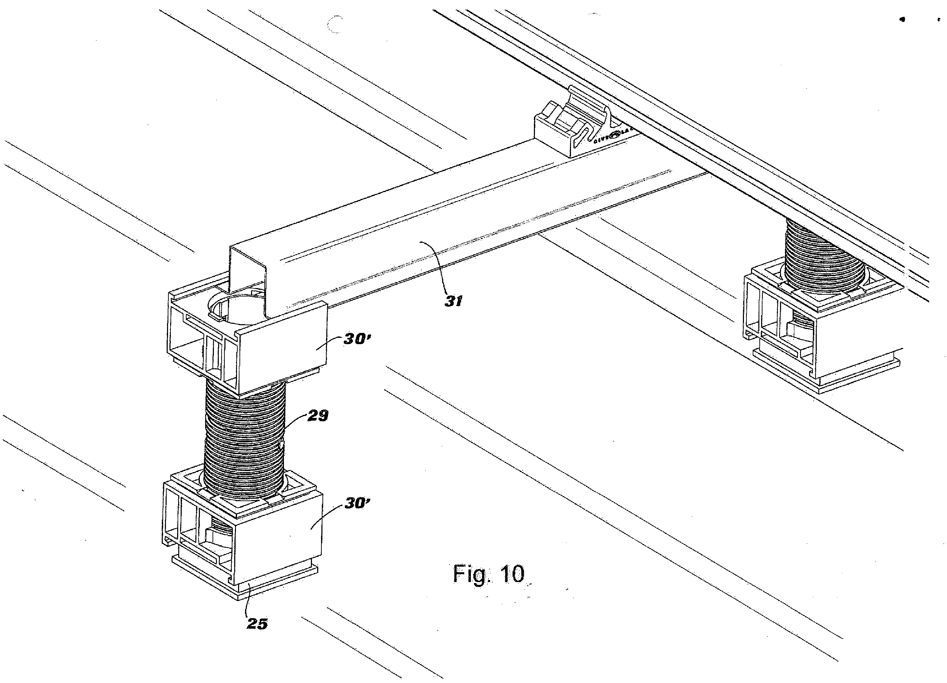

Fig. 8 shows another variant equivalent to that illustrated in fig. 6, wherein the clamps 27 of covering plates F₁ are fastened to crossbars 31 in turn engaged with the upper heads 30" of a series of spacing elements 29 (illustrated in greater detail in fig. 10).

As can be evinced from the above, the combined structure according to the invention perfectly achieves the objects set forth in the premises. The combination of the panel with the specific corrugated metal sheet and the respective attaching means provides an extremely flexible composite structure easy to set working. The attaching means may be fastened from the flat side of the panel, despite being able to attach securely, by simple deformation and snap engagement, to the ribbing of the corrugated metal sheet: a gap compartment free from dividing obstacles can hence be obtained. The ribbings on the lower side, in addition to allowing a good fastening of the attaching means, contribute to the stiffening of the insulating panel. Finally, the original configuration of the attaching means allows to achieve good installation flexibility, without special constraints on the pitch of the covering metal sheets and being able to determine the correct roof slope in those situations in which it is not possible to obtain it through the simple setting of a single covering element.

However, it is understood that the protection of the above-described structure must not be considered limited to the particular embodiments illustrated, but extends to any other technically equivalent construction variant which falls within the scope of protection as defined by the attached claims.

In particular, through a differentiated choice of materials and sizing, the principle structure described here can be adapted to countless different application sectors.

Specifically, despite not explicitly described, it is understood that the panels according to the invention have widths (measured in a direction orthogonal to the ribbings of the corrugated metal sheet) compatible with the production processes and with transport economies, but can be securely coupled with each other - defining a continuous covering - in different ways which are not specifically dealt with in the present invention.

Moreover, the special shape of the fastening box-like bodies 25 or of spacing columns 29 is to be considered as a preferred embodiment: other numerous variants may be conceived by the person skilled in the field, for example with bayonet coupling.

## Claims

1. Combined structure of insulated panel (P), consisting of a pair of metal sheets (1, 2), which enclose sandwich-like an insulating layer, and of relative attaching means (25), at least one of said metal sheets being corrugated and provided with ribbings (4) with a cross-section forming undercuts for the attachment of said attaching means, **characterised in that**
the section shape of said ribbings (4) is a geometric shape given by two equilateral trapetiums one above the other, the bottom one having a major base and with the slanting sides more convergent than the top one, between which an S-shaped fold forming at least an inner undercut recess (6) is provided, **in that**
said attaching means are essentially in the shape of a fastening box-like body (25) on a side of which a pair of arms projects which can be elastically spread apart/moved closer together (26) and snap-engaged with said undercut recess, the other side forming an anchoring element for a fastening clamp (27) of a covering and finishing metal sheet (F₁), and **in that**
said pair of arms (26) crosses the entire thickness of said panel (P) entering from a substantially flat metal sheet (1) of said panel and engaging with said inner undercut recess (6a) of ribbings.

2. Combined structure of insulated panel and attaching means as claimed in claim 1, **characterised in that** said pair of arms (26) ends with a hook shape (26a).

3. Combined structure of insulated panel and attaching means as claimed in claim 1 or 2, wherein said insulating panel (P) is provided with at least one pair of slits or holes on the metal sheet (1) opposite to said corrugated metal sheet (2) provided with ribbings, suited to the introduction of said pair of arms (26) of the attaching means, said hook-shaped ends (26a) engaging with said undercut recesses (6) from the inside of said ribbing (4).

4. Combined structure of insulated panel and attaching means as claimed in any one of the preceding claims, wherein said box-like fastening body (25) has slider-shaped engaging means (25c).

5. Combined structure of insulated panel and attaching means as claimed in claim 4, wherein said slider-shaped engaging means (25c) are engageable with fastening clamps (27) or with crossbars (27a, 31) provided with fastening clamps.

6. Combined structure of insulated panel and attaching means as claimed in claim 5, wherein between said fastening clamps (27) or crossbars (27a, 31) and said fastening body (25) a spacing column (29, 30', 30") provided with fine height-adjusting means is provided.

7. Combined structure of insulated panel and attaching means as claimed in claim 6, wherein said fine adjusting means are in the shape of an outer thread on a cylindrical surface of said spacing column (29) apt to engage with a respective inner thread provided within said fastening bodies (25).

## Patentansprüche

1. Verbundstruktur eines isolierten Paneels (P), bestehend aus einem Paar Metallbleche (1, 2), die sandwichartig eine isolierende Schicht umschließen, und aus diesbezüglichen Befestigungsmitteln (25), wobei zumindest eines der genannten Metallbleche gewellt ist und mit Verrippungen (4) versehen ist, die einen Querschnitt aufweisen, der Hinterschneidungen für die Anbringung der genannten Befestigungsmittel bildet, **dadurch gekennzeichnet, dass**
die Querschnittsform der genannten Verrippungen (4) eine geometrische Form ist, die durch zwei gleichschenklige Trapeze eines über dem anderen gegeben ist, wobei das untere eine größere Basis aufweist und mit den schrägen Seiten stärker konvergiert als das obere, wobei sich zwischen beiden eine S-förmige Biegung befindet, die zumindest eine innere hinterschnittene Ausnehmung (6) bildet, dass
die Befestigungsmittel im Wesentlichen in der Form eines kastenartigen Befestigungskörpers (25) sind, von dessen einer Seite ein Paar Arme vorstehen, die elastisch auseinandergespreizt oder näher zueinander (26) bewegt werden können und mit der genannten hinterschnittenen Ausnehmung verrastet werden können, wobei die andere Seite ein Verankerungselement für eine Befestigungsklemme (27) eines abdeckenden und abschließenden Metallblechs (F₁) bildet, und dass
das genannte Paar von Armen (26) durch die gesamte Dicke des Paneels (P) hindurchgeht, wobei es bei einem im Wesentlichen ebenen Metallblech (1) des Paneels eintritt und mit der genannten inneren hinterschnittenen Ausnehmung (6a) der Verrippung zusammenwirkt.

2. Verbundstruktur eines isolierten Paneels und Befestigungsmitteln nach Anspruch 1, **dadurch gekennzeichnet, dass** das genannte Paar von Armen (26) mit einer Hakenform (26a) endet.

3. Verbundstruktur eines isolierten Paneels und Befestigungsmitteln nach Anspruch 1 oder 2, **dadurch gekennzeichnet, dass** das isolierende Paneel (P) mit zumindest einem Paar von Schlitzen oder Löchern auf dem Metallblech (1) gegenüber dem gewellten Metallblech (2), das mit Verrippungen versehen ist, ausgebildet ist, geeignet für die Einführung des genannten Paars von Armen (26) der Befestigungsmittel, wobei die genannten hakenförmigen Enden (26a) mit den genannten hinterschnittenen Ausnehmungen (6) von der Innenseite der genannten Verrippung (4) zusammenwirken.

4. Verbundstruktur eines isolierten Paneels und Befestigungsmitteln nach einem der vorangehenden Ansprüche, **dadurch gekennzeichnet, dass** der genannte kastenartige Befestigungskörper (25) gleitstückförmige Eingreifmittel (25c) aufweist.

5. Verbundstruktur eines isolierten Paneels und Befestigungsmitteln nach Anspruch 4, **dadurch gekennzeichnet, dass** die genannten gleitstückförmigen Eingreifmittel (25c) mit Befestigungsklemmen (27) oder mit Querstangen (27a, 31), die mit Befestigungsklemmen versehen sind, in Eingriff bringbar sind.

6. Verbundstruktur eines isolierten Paneels und Befestigungsmitteln nach Anspruch 5, **dadurch gekennzeichnet, dass** zwischen den genannten Befestigungsklemmen (27) oder Querstangen (27a, 31) und dem Befestigungskörper (25) eine Abstandssäule (29, 30', 30") angeordnet ist, die mit Höhen-Feineinstellungsmitteln versehen ist.

7. Verbundstruktur eines isolierten Paneels und Befestigungsmitteln nach Anspruch 6, **dadurch gekennzeichnet, dass** die genannten Feineinstellungsmittel in der Form eines Außengewindes auf einer zylindrischen Oberfläche der genannten Abstandssäule (29) vorgesehen sind und geeignet sind, mit einem entsprechenden Innengewinde zusammenzuwirken, das innerhalb der genannten Befestigungskörper (25) angeordnet ist.

## Revendications

1. Structure combinée de panneau isolé (P), composée de deux tôles de métal (1, 2) qui entourent en sandwich une couche isolante, et de moyens de fixation relatifs (25), l'une au moins desdites tôles de métal étant ondulée et pourvue de nervures (4) avec une section transversale formant des contre-dépouilles pour la fixation des moyens de fixation, **caractérisée**
**en ce que** la forme de section des nervures (4) est une forme géométrique définie par deux trapèzes équilatéraux superposés, celui du bas présentant une base principale et des côtés inclinées plus convergents que celui du haut, avec entre les deux un pli en S qui forme au moins un creux à contre-dépouille intérieure (6),
**en ce que** les moyens de fixation ont essentiellement la forme d'un corps de fixation en forme de boîtier (25) sur un côté duquel dépasse une paire de bras qui peut s'écarter/se rapprocher (26) élastiquement et qui est emboîtée par ressort dans le creux à contre-dépouille, l'autre côté formant un élément d'ancrage pour une fixation par serrage (27) d'une tôle de métal de recouvrement et de finition (F₁), et
**en ce que** la paire de bras (26) traverse toute l'épaisseur du panneau (P), en entrant par une tôle de métal (1) globalement plate du panneau et en s'emboîtant dans le creux à contre-dépouille intérieure (6a) des nervures.

2. Structure combinée de panneau isolé et de moyens de fixation telle qu'elle est revendiquée dans la revendication 1, **caractérisée en ce que** la paire de bras (26) se termine par une forme de crochets (26a).

3. Structure combinée de panneau isolé et de moyens de fixation telle qu'elle est revendiquée dans la revendication 1 ou 2, étant précisé que le panneau isolant (P) est pourvu d'au moins une paire de fentes ou d'orifices sur la tôle de métal (1) opposée à la tôle de métal ondulée (2) pourvue de nervures, apte à l'introduction de la paire de bras (26) des moyens de fixation, les extrémités en forme de crochets (26a) s'emboîtant dans les creux à contre-dépouille (6) à partir de l'intérieur de la nervure (4).

4. Structure combinée de panneau isolé et de moyens de fixation telle qu'elle est revendiquée dans l'une quelconque des revendications précédentes, étant précisé que le corps de fixation en forme de boîtier (25) comporte des moyens d'emboîtement en forme de coulisseaux (25c).

5. Structure combinée de panneau isolé et de moyens de fixation telle qu'elle est revendiquée dans la revendication 4, **caractérisée en ce que** les moyens d'emboîtement en forme de coulisseaux (25c) sont aptes à s'emboîter avec les fixations par serrage (27) ou avec des traverses (27a, 31) pourvues de fixations par serrage.

6. Structure combinée de panneau isolé et de moyens de fixation telle qu'elle est revendiquée dans la revendication 5, étant précisé qu'il est prévu, entre les fixations par serrage (27) ou les traverses (27a, 31) et le corps de fixation (25), une colonne d'écartement (29, 30', 30") pourvue de moyens de réglage en hauteur précis.

7. Structure combinée de panneau isolé et de moyens de fixation telle qu'elle est revendiquée dans la revendication 6, étant précisé que les moyens de réglage précis ont la forme d'un filetage extérieur sur une surface cylindrique de la colonne d'écartement (29), apte à s'accoupler à un filetage intérieur respectif prévu à l'intérieur des corps de fixation (25).
